# EUROPEAN PATENT SPECIFICATION

(11) **EP 1 701 470 B1**
(45) Date of publication and mention of the grant of the patent: **08.05.2013**
(21) Application number: 04738208.0
(22) Date of filing: 04.06.2004
(51) Int. Cl.: H04L 12/24, H04L 29/12

(54) **THE METHOD OF BROADBAND ACCESS DEVICE FOR CONTROLLING DHCP RELAY USER**
VERFAHREN EINER BREITBAND-ZUGANGSEINRICHTUNG ZUM BEAUFSICHTIGEN EINES DHCP-RELAY-BENUTZERS
PROCÉDÉ D'UN DISPOSITIF D'ACCES A LARGE BANDE POUR LE CONTRÔLE D'UN UTILISATEUR DE RELAIS DHCP

(30) Priority: 31.12.2003 CN 200310116094
(43) Date of publication of application: 13.09.2006
(73) Proprietor: ZTE Corporation, 518057 Shenzhen, Guangdong (CN)
(72) Inventor: ZHAO, Zhenfu, ZTE Plaza, Keji Road South, Shenzhen, Guangdong 518057 (CN); WANG, Dong, ZTE Plaza, Keji Road South, Shenzhen, Guangdong 518057 (CN); LI, Hua, ZTE Plaza, Keji Road South, Shenzhen, Guangdong 518057 (CN)
(74) Representative: Walcher, Armin
(86) International application number: PCT/CN2004/000604
(87) International publication number: WO 2005/067205

(56) References cited:
- EP-A- 0 946 027
- CN-A- 1 251 710
- CN-A- 1 458 760
- US-A- 5 884 024
- P. FRY, J. KNIGHT: "A Caching DHCP Relay" TECHNICAL REPORT 97-10, [Online] 1997, XP002485726 Rensselaer Polytechnic Institute Retrieved from the Internet: URL:http://www.cs.rpi.edu/research/pdf/97- 10.pdf> [retrieved on 2008-06-25]
- BOUCHAT C ET AL: "QoS in DSL access", IEEE COMMUNICATIONS MAGAZINE, IEEE SERVICE CENTER, PISCATAWAY, US LNKD- DOI:10.1109/MCOM.2003.1232245, vol. 41, no. 9, 1 September 2003 (2003-09-01), pages 108-114, XP011100895, ISSN: 0163-6804

## Description

### TECHNICAL FIELDS OF THE INVENTION

The present invention relates to a broadband access network device which dynamically assigns IP addresses to DHCP (Dynamic Host Configuration Protocol) users by utilizing a DHCP relay in an Ethernet environment. The device obtains IP address for a client through an external DHCP server and needs to implement control and management of the process of address assignment to the DHCP users.

### BACKGROUND OF THE INVENTION

With the development of broadband network technology, many broadband access network devices, such as wireless AC (Access Controller), broadband AS (Access Server) and broadband access router, are emerged. Generally, these network devices have user access mode of DHCP+WEB PORTAL and the like. Wherein, in the broadband user access mode of DHCP+WEB PORTAL, IP address needs to be assigned to the accessed user and to be managed. In the current implementations, these broadband network access devices mostly provide a function of assigning dynamic IP address to an internal DHCP CLIENT by an external DHCP SERVER through the DHCP relay.

However, how to manage the DHCP relay user when the DHCP relay is enabled in the broadband access device is not taken into account in DHCP related protocols. For example, in DHCP protocol, broadcast interaction between the DHCP CLIENT and the external DHCP SERVER is performed through the DHCP relay, while unicast interaction is performed directly between the DHCP CLIENT and the external DHCP SERVER and need not be relayed by the DHCP relay disposed in Application Layer of TCP/IP protocol. It becomes a difficult problem that how to manage the DHCP relay user, i.e. how to enable the broadband access device to control and manage the interaction between the DHCP user and the external DHCP SERVER, vary the network parameters of the DHCP user, and detect the DHCP user online and so on. Currently, many methods used to handle the problem in the broadband access device supporting DHCP relay are identifying and classifying the DHCP data packets for individual and special processing at lower layer of TCP/IP (Transfer Control Protocol/Internet Protocol) protocol, such as data link layer. Such methods would require varying TCP/IP protocol stack or depending on related particular Hook Function provided by TCP/IP protocol stack to perform related special processing. Moreover, such methods cannot be implemented when source codes of TCP/IP protocol stack is unavailable or TCP/IP protocol stack does not provide the related particular Hook Function.

Additionally, P. FRY, J. KNIGHT: "A Caching DHCP Relay" TECHNICAL REPORT 97-10, [Online] 1997, XP002485726 Rensselaer Polytechnic Institute Retrieved from the Internet: URL:http://www.cs.rpi.edu/research/pdf/97-10.pdf> [retrieved on 2008-06-25], described a Caching DHCP Relay Agent (CDRA) which can reduce the workload of a DHCP server and provide DHCP services during server failures.

The solutions for solving the above problem in the prior art has not been found.

### SUMMARY OF THE INVENTION

An object of the present invention is to provide a method of broadband access device for controlling a DHCP relay user, which method can solve the problem that the control and management of the interaction between the DHCP client and the DHCP server are difficult to perform because the unicast interaction is performed directly between the DHCP client and the DHCP server and needs not the DHCP relay disposed in Application Layer of TCP/IP protocol.

To complete the above-mentioned object, the present invention provides a method of broadband access device for controlling a DHCP relay user to implement the control and management of interaction between a DHCP client and a DHCP server by the broadband access device, which method comprises modifying protocol fields in all of DHCP messages interacted between the DHCP client and the DHCP server through a DHCP relay during initiation phase of the the DHCP client and the DHCP server/during initiation phase of the DHCP interaction at Application Layer of TCP/IP protocol, so that all of the DHCP messages interacted between the client and the server can pass through the DHCP relay; wherein the modifying further comprises the following steps:
Step 1, after receiving any DHCP messages for request sent from the DHCP client to the DHCP server, the DHCP relay filling in fields associated with the DHCP relay in the DHCP message for request and then sending the DHCP message for request to the DHCP server, so that any DHCP messages for response returned from the DHCP server to the DHCP client can pass through the relay;

The method is characterized by the modifying further comprising steps:
Step 2, after receiving a first DHCP message for response returned from the DHCP server to the DHCP client, the DHCP relay extracting and storing DHCP server parameters in fields associated with the DHCP server in the first DHCP message for response, then replacing the DHCP server parameters with DHCP relay parameters of the DHCP relay and sending the first DHCP message for response to the DHCP client;
Step 3, the DHCP relay processing any received subsequent DHCP messages for response sent from the DHCP server to the DHCP client, determining whether the subsequent DHCP messages for response contains the fields associated with the DHCP sever, if not, sending the subsequent DHCP messages for response to the DHCP client directly, otherwise, replacing the DHCP server parameters in the fields with the DHCP relay parameters, and sending the subsequent DHCP messages for response to the DHCP client so that any subsequent DHCP messages for request sent from the DHCP client to the DHCP server can pass through the DHCP relay;
Step 4, the DHCP relay processing the subsequent DHCP messages for request, determining whether the subsequent DHCP messages for request contains the fields associated with the DHCP sever, if not, sending the subsequent DHCP messages for request to the DHCP server directly, otherwise, filling in the fields associated with the DHCP server with the DHCP server parameter stored in Step 2, and sending the subsequent DHCP messages for request to the DHCP server so that the subsequent DHCP messages for request can pass validity checking by the DHCP server.

The method is characterized by further comprising:
Step 5, the DHCP relay controlling and managing the interaction between the DHCP client and the DHCP server, varying network parameters of the DHCP client and detecting the DHCP client online according to requirements of user management strategy.

The method is characterized by in Step 1, for DHCPDISCOVER or DHCPREQUEST message sent from the DHCP client to the DHCP server, the DHCP relay filling in the fields associated with the DHCP relay with values, so that DHCPOFFER, DHCPACK or DHCPNAK response to the request from the DHCP server to the DHCP client can be sent to the DHCP relay.

The method is characterized by in Step 2, the DHCP relay receiving DHCPOFFER, DHCPACK or DHCPNAK response, extracting and storing the DHCP server parameters in DHCPOFFER, DHCPACK or DHCPNAK response, and replacing the DHCP server parameters with the DHCP relay parameters so that a unicast request to the DHCP server is still sent to the DHCP relay after the DHCP client has configured IP address.

The method is characterized by in Step 3, the DHCP relay receiving the subsequent DHCP messages for response, if the fields associated with the DHCP server are contained, replacing the values of the fields associated with the DHCP server with IP address of the DHCP relay.

The method is characterized by the subsequent DHCP messages for response is DHCPACK message in Dynamical Host Configuration Protocol.

The method is characterized by the subsequent DHCP messages for request is DHCPREQUEST message, DHCPINFORM message or DHCPRELEASE message in Dynamical Host Configuration Protocol.

### BRIEF DESCRIPTION OF THE DRAWINGS

Fig. 1 shows a flow chart of modifying the related fields in the DHCP message in a method according to the present invention;
Fig. 2 shows a normal time sequence diagram of the DHCP CLIENT obtaining the properties of network in the present invention;
Fig. 3 shows a diagram of an ISP access network implementing the present invention.

### DETAILED DESCRIPTION OF EMBODIMENTS

The present invention now will be described more fully hereinafter with reference to the accompanying drawings, in which preferred embodiments of the invention are shown.

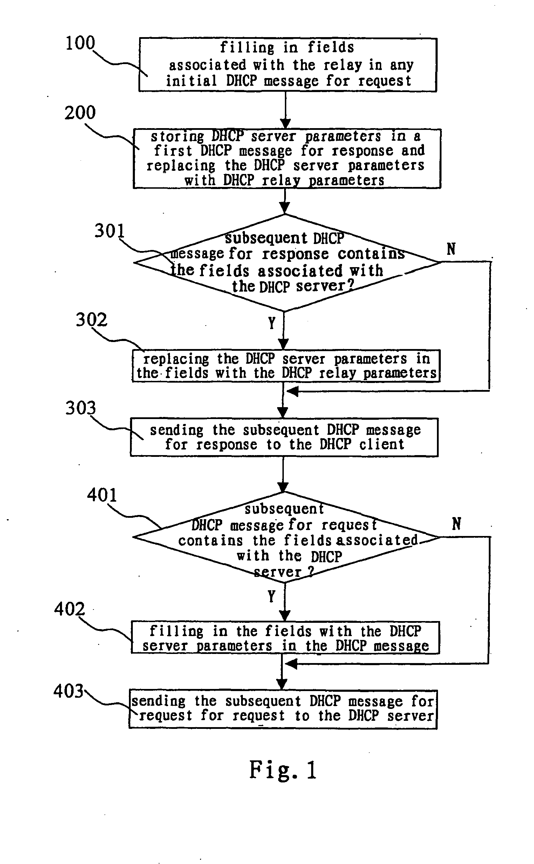

Referring to Fig. 1, the modifying of the fields in the DHCP message in the present invention comprises the following steps:
Step 100, after the DHCP relay receives any DHCP message for request sent from the DHCP client to the DHCP server, the DHCP relay fills in the fields associated with the DHCP relay in the initial DHCP message for request, so that
any DHCP messages for response returned from the DHCP server to the DHCP client can pass through the DHCP relay.
Step 200, the DHCP relay receives the first DHCP message for response returned from the DHCP server to the DHCP client, then the DHCP relay extracts and stores the DHCP server parameters of the fields associated with the DHCP server in the first DHCP message for response, and the DHCP relay replaces the DHCP server parameters with its DHCP relay parameters and sending the first DHCP message for response to the DHCP client;
Step 301, the DHCP relay processes any received subsequent DHCP messages for response returned from the DHCP server to the DHCP client, and determines whether the subsequent DHCP messages for response contains the fields associated with the DHCP sever. If no, Step 303 is performed. If yes, Step 302 is performed.
Step 302, the DHCP relay parameters are used to replace the DHCP server parameters in the fields, so that any subsequent DHCP messages for request sent from the DHCP client to the DHCP server can pass through the DHCP relay.
Step 303, the subsequent DHCP messages for response is sending to the DHCP client.
Step 401, the DHCP relay processes the subsequent DHCP messages for request and determines whether the subsequent DHCP message for request contains the fields associated with the DHCP server. If no, Step 403 is performed. If yes, Step 402 is performed.
Step 402, the DHCP server parameters stored in Step 200 are written into the fields associated with the DHCP server, so that any subsequent DHCP messages for request can pass the validity checking by the DHCP server.
Step 403, the subsequent DHCP messages for response is sent to the DHCP server.

The unicast DHCP request sent from the DHCP client to the DHCP server is actually sent to the DHCP relay after the processing of Step 200 to Step 403.

In the subsequent processing, the broadband access device can control and manage the interaction between the DHCP user and the external DHCP server, vary the network parameters of the DHCP user and detect the DHCP user online according to the requirements of the user management strategy.

The processing described above can enable all of the DHCP interaction between the DHCP client and the external DHCP server, rather than only the broadcast packets sent from the DHCP client, to pass through the DHCP relay and meet the requirements of DHCP protocol. Also, it can enable the broadband access device to implement the control and management of the interaction between the DHCP client and the DHCP server.

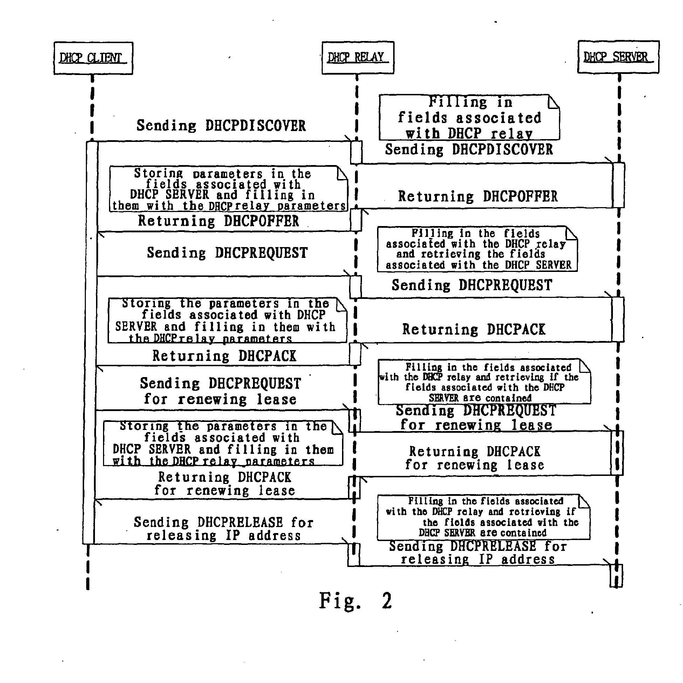

As shown in Fig. 2, it shows the time sequence diagram of the method according to the present invention. It can be seen from the figure that for DHCPDISCOVER message sent from the DHCP CLIENT (client) to the DHCP SERVER (server), the DHCP relay merely needs to fill in the fields associated with the DHCP relay with the values, so that the DHCP SERVER can return a response to the DHCP CLIENT to the DHCP relay. While receiving DHCPOFFER response returned from the DHCP SERVER to the DHCP CLIENT, the DHCP relay needs to store the values of the fields associated with the DHCP SERVER and replaces them with its DHCP relay parameters, so that the unicast request to the DHCP SERVER can be still sent to the DHCP relay after the DHCP CLIENT has configured IP address. In the following interaction, when receiving the DHCP message for request from the DHCP CLIENT, the DHCP relay needs to fill in the fields associated with the DHCP relay. Meanwhile, if the DHCP message contains the fields associated with the DHCP SERVER, the DHCP relay will fill in the fields with the previous stored values of the fields associated with the DHCP SERVER. Also, when the DHCP relay receives the DHCP message for response from the DHCP SERVER, if the DHCP message contains the fields associated with the DHCP SERVER, the DHCP relay needs to replace the values of the fields associated with the DHCP SERVER with its IP address.

The steps of the method of the present invention are described with combination of a wireless access system next. According to the requirements, the broadband access server needs to support an authentication mode based on DHCP+WEB PORTAL for broadband users. To simplify the management, ISP disposes a DHCP SERVER serving for assignment of IP address in the network. It is required that the users who requires WEB PORTAL as an access authentication mode can automatically obtain the properties of the network, such as IP address, by using the external DHCP SERVER. Therefore, the method of the present invention is applied when the DHCP RELAY module is developed in order to dynamically assign the IP address to the user at user side by the external DHCP SERVER and control/manage the interaction between the DHCP SERVER and the DHCP CLIENT on demand.

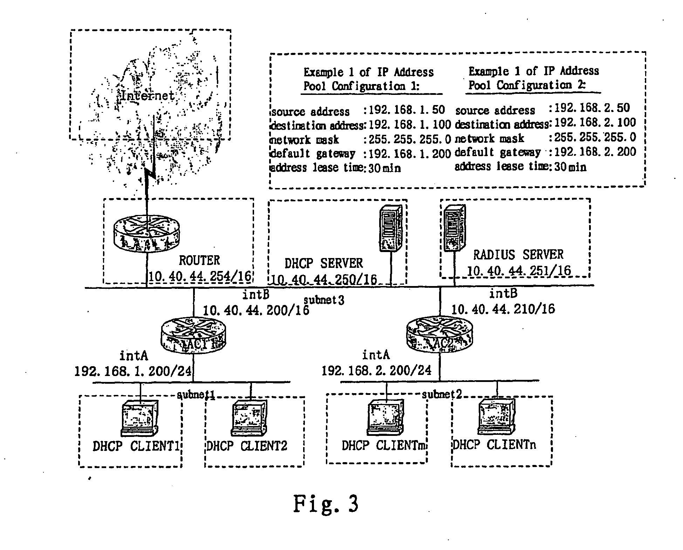

As shown in Fig. 3, it shows a diagram of an ISP access network. Two AC devices are used in Fig. 3, which are AC 1 and AC2, to complete the access for the DHCP users. The number of AC devices is related to the number of users (Fig. 3 only shows one network structure including multiple AC devices). A RADIUS (Remote Authentication Dial In User Service) SERVER is used to authenticate and bill for the users. A DHCP SERVER is used to assign IP addresses to the DHCP users accessed by the two AC devices. And a router is used to access to Internet. In order to simplify the description of the steps in "the method of broadband access device for controlling and managing DHCP relay users", the interaction between the DHCP CLIENT1 and the DHCP SERVER via AC1 is used as an example (other interactions between the DHCP CLIENT and the external DHCP SERVER via AC connected to the DHCP CLIENT are the same).

The processing steps of the method of the present invention implemented by AC 1 are as bellows:
1) When the DHCP CLIENT1 initializes dynamic IP address lease, the DHCP CLIENT1 firstly sends DHCPDISCOVER message broadcast limitedly over the local area network. After receipt of DHCPDISCOVER message sent from the DHCP CLIENT1, the DHCP relay in AC1 device fills in the fields associated with the DHCP relay and sending DHCPDISCOVER message to the external DHCP SERVER.
2) The external DHCP SERVER sends DHCPOFFER message to the DHCP relay in the AC 1 device after completing the processing. After receipt of the response message DHCPOFFER returned from the DHCP SERVER, the DHCP relay in the AC1 device extracts and stores the values of the fields associated with the DHCP SERVER and replaces the values of the fields associated with the DHCP SERVER with the parameters of the DHCP relay. And then, DHCPOFFER message is sent to the DHCP CLIENT1.
3) When receiving DHCPOFFER message, the DHCP CLIENT1 checks the network parameters and then sends DHCPREQUEST message broadcast limitedly over the local area network. After receipt of DHCPREQUEST message sent from the DHCP CLIENT1, the DHCP relay in AC1 device needs to fill in the fields associated with the DHCP relay. Meanwhile, if the DHCP message contains the fields associated with the DHCP SERVER, the values of the fields associated with the DHCP SERVER in the DHCP packet is replaced with the values of the fields associated with the DHCP SERVER stored in Step 2) to pass the validity checking by the DHCP SERVER. And then, DHCPREQUEST message is sent to the external DHCP SERVER.
4) When receiving DHCPREQUEST message, the external DHCP SERVER manages the assignment of IP address and then returns DHCPACK message to the DHCP relay in AC1 device. After receipt of DHCPACK message sent from the DHCP SERVER, the DHCP relay in AC1 device replaces the values of the fields associated with the DHCP SERVER with the parameters of the DHCP relay if the DHCP message contains the fields associated with the DHCP SERVER. And then, DHCPACK message is sent to the DHCP CLIENT1.
5) Before IP address configuration of the DHCP CLIENT1 is completed, when receiving the message such as DHCPREQUEST sent from the DHCP CLIENT1, the DHCP relay in AC1 device fills in the fields associated with the DHCP relay. Meanwhile, if the DHCP message contains the fields associated with the DHCP SERVER, the fields associated with the DHCP SERVER in the DHCP message is replaced with the values of the fields associated with the DHCP SERVER stored in Step 2) to pass the validity checking by the DHCP SERVER.
6) After the IP address configuration of the DHCP CLIENT1 is completed, when receiving DHCPREQUEST, DHCPINFORM or DHCPRELEASE message for renewing lease sent from the DHCP CLIENT1, the DHCP relay in AC1 device fills in the fields associated with the DHCP relay. After the IP address configuration is completed, if the DHCP message does not contain the fields associated with the DHCP SERVER, the fields associated with the DHCP SERVER does not need to be processed.
7) After the IP address configuration of the DHCP CLIENT1 is completed, when receiving the message for renewing lease such as DHCPACK sent from the DHCP SERVER, the DHCP relay in AC 1 device needs to replace the values of the fields associated with the DHCP SERVER with the parameters of the DHCP relay if the DHCP message contains the fields associated with the DHCP SERVER. And then, DHCPACK message is sent to the DHCP CLIENT1.
8) As a result of the processing described above, all of the DHCP messages between the DHCP CLIENT1 and the external DHCP SERVER are able to pass through the DHCP relay in the AC1 device transparently so that the broadband access device can implement the control and management of the DHCP interaction between the DHCP CLIENT1 and the DHCP SERVER.
9) During the above described process, the DHCP relay in the broadband access AC1 device can control and manage the interaction between the DHCP user and the external DHCP SERVER, vary the network parameters of the DHCP user and detect the DHCP user online according to the requirements of user management strategy.

### Industrial Utility

The technical effect of the present invention is that all of the DHCP messages interacted between the DHCP client and the DHCP server are enabled to pass through the DHCP relay by modifying the fields of the data packets sent from the DHCP client and the DHCP server, and it can be easily implemented to control and manage the interaction between the DHCP client and the external DHCP server, vary the network parameters of the DHCP user, detect the DHCP user online and the like according to the requirements of the user management strategy by controlling the DHCP relay. Furthermore, in the present invention, only Application Layer of TCP/IP protocol is needed to be processed to achieve the predetermined purpose of control/management. There is no difference from the ordinary network application layer software. It is not necessary for the present invention to modify the TCP/IP protocol stack or depend on the related Hook Function provided by the TCP/IP protocol stack.

## Claims

1. A method of broadband access device for controlling a DHCP relay user, **characterized in that** the method is to implement control and management of interaction between a DHCP client and a DHCP server, the method comprises modifying protocol fields in all of DHCP messages interacted between the DHCP client and the DHCP server through a DHCP relay during initiation phase of the DHCP interaction at Application Layer of TCP/IP protocol, so that all of the DHCP messages interacted between the DHCP client and the DHCP server can pass through the DHCP relay;
wherein the modifying further comprises the following step:
Step 1, after receiving any DHCP messages for request sent from the DHCP client to the DHCP server, the DHCP relay filling in fields associated with the DHCP relay in the DHCP message for request and then sending the DHCP message for request to the DHCP server, so that any DHCP messages for response returned from the DHCP server to the DHCP client can pass through the DHCP relay (100).

2. The method of claim 1, wherein the modifying further comprises the following steps:
Step 2, after receiving a first DHCP message for response returned from the DHCP server to the DHCP client, the DHCP relay extracting and storing DHCP server parameters of the fields associated with the DHCP server in the first DHCP message for response and then replacing the DHCP server parameters with DHCP relay parameters of the DHCP relay and sending the first DHCP message for response to the DHCP client (200);
Step 3, the relay processing any received subsequent DHCP messages for response returned from the DHCP server to the DHCP client, determining whether the subsequent DHCP messages for response contains the fields associated with the DHCP sever, if not, sending the subsequent DHCP messages for response to the DHCP client directly, otherwise, replacing the DHCP server parameters in the fields associated with the DHCP server with the DHCP relay parameters, and then sending the subsequent DHCP messages for response to the DHCP client so that any subsequent DHCP messages for request sent from the DHCP client to the DHCP server can pass through the DHCP relay (301, 302);
Step 4, the DHCP relay processing the subsequent DHCP messages for request, determining whether the subsequent DHCP messages for request contains the fields associated with the DHCP sever, if no, sending the subsequent data packet for request to the DHCP server directly, otherwise, filling in the fields associated with the DHCP server with the DHCP server parameter stored in Step 2, and then sending the subsequent DHCP messages for request to the DHCP server so that any subsequent DHCP messages for request can pass validity checking by the DHCP server (401, 402).

3. The method of claim 2, further comprising:
Step 5, the DHCP relay controlling and managing the interaction between the DHCP client and the DHCP server, varying network parameters of the DHCP client and detecting the DHCP client online according to requirements of user management strategy.

4. The method of claim 2, wherein in Step 1, for DHCPDISCOVER or DHCPREQUEST message sent from the DHCP client to the DHCP server, the DHCP relay fills in the fields associated with the DHCP relay with values so that DHCPOFFER, DHCPACK or DHCPNAK response from the DHCP server to the DHCP client can be sent to the DHCP relay.

5. The method of claim 4, wherein in Step 2, the DHCP relay receives DHCPOFFER, DHCPACK or DHCPNAK response, extracts and stores the DHCP server parameters in DHCPOFFER, DHCPACK or DHCPNAK response, and replaces the DHCP server parameters with the DHCP relay parameters so that a unicast request to the DHCP server can be still sent to the DHCP relay after the DHCP client has configured IP address.

6. The method of claim 4, wherein in Step 3, the DHCP relay receives the subsequent DHCP messages for response, and if the fields associated with the DHCP server are contained, the DHCP relay replaces the values of the fields associated with the DHCP server with its IP address.

7. The method of claim 6, wherein the subsequent DHCP messages for response is DHCPACK message in Dynamical Host Configuration Protocol.

8. The method of claim 6, wherein the subsequent DHCP messages for request is DHCPREQUEST message, DHCPINFORM message or DHCPRELEASE message in Dynamical Host Configuration Protocol.

## Patentansprüche

1. Verfahren einer Breitbandzugangsvorrichtung zum Steuern eines DHCP-Relay-Agents, **dadurch gekennzeichnet, dass** das Verfahren dazu dient, Steuerung und Management der Interaktion zwischen einem DHCP-Client und einem DHCP-Server zu implementieren, wobei das Verfahren das Modifizieren von Protokollfeldern in allen DHCP-Meldungen, die zwischen dem DHCP-Client und dem DHCP-Server interagieren, durch ein DHCP-Relay während der Einleitungsphase der DHCP-Interaktion in der Anwendungsschicht des TCP/IP-Protokolls umfasst, so dass alle DHCP-Meldungen, die zwischen dem DHCP-Client und dem DHCP-Server interagieren, das DHCP-Relay passieren können;
wobei das Modifizieren ferner den folgenden Schritt umfasst:
Schritt 1, nach dem Empfangen beliebiger DHCP-Anforderungsmeldungen, die von dem DHCP-Client zu dem DHCP-Server gesendet werden, füllt das DHCP-Relay Felder, die dem DHCP-Relay zugeordnet sind, in der DHCP-Anforderungsmeldung aus und sendet dann die DHCP-Anforderungsmeldung zu dem DHCP-Server, so dass beliebige DHCP-Antwortmeldungen, die von dem DHCP-Server zu dem DHCP-Client zurückgegeben werden, das DHCP-Relay (100) passieren können.

2. Verfahren nach Anspruch 1, wobei das Modifizieren ferner die folgenden Schritte umfasst:
Schritt 2, nach dem Empfangen einer ersten DHCP-Antwortmeldung, die von dem DHCP-Server zu dem DHCP-Client zurückgegeben wird, extrahiert und speichert das DHCP-Relay DHCP-Serverparameter der Felder in der ersten DHCP-Antwortmeldung, die dem DHCP-Server zugeordnet sind, und ersetzt dann die DHCP-Serverparameter durch DHCP-Relayparameter des DHCP-Relay und sendet die erste DHCP-Antwortmeldung zu dem DHCP-Client (200);
Schritt 3, das Relay verarbeitet alle empfangenen nachfolgenden DHCP-Antwortmeldungen, die von dem DHCP-Server zu dem DHCP-Client zurückgegeben werden, bestimmt, ob die nachfolgenden DHCP-Antwortmeldungen die Felder enthalten, die dem DHCP-Server zugeordnet sind, sendet, falls das nicht der Fall ist, die nachfolgenden DHCP-Antwortmeldungen direkt zu dem DHCP-Client, ersetzt andernfalls die DHCP-Serverparameter in den Feldern, die dem DHCP-Server zugeordnet sind, durch DHCP-Relayparameter und sendet dann die nachfolgenden DHCP-Antwortmeldungen zu dem DHCP-Client, so dass beliebige nachfolgende DHCP-Anforderungsmeldungen, die von dem DHCP-Client zu dem DHCP-Server gesendet werden, das DHCP-Relay passieren können (301, 302);
Schritt 4, das DHCP-Relay verarbeitet, die nachfolgenden DHCP-Anforderungsmeldungen, bestimmt, ob die nachfolgenden DHCP-Anforderungsmeldungen die Felder enthalten, die dem DHCP-Server zugeordnet sind, sendet, falls das nicht der Fall ist, das nachfolgende Anforderungsdatenpaket direkt zu dem DHCP-Server, füllt andernfalls die Felder, die dem DHCP-Server zugeordnet sind, mit den DHCP-Serverparametern, die in Schritt 2 gespeichert sind, aus und sendet dann die nachfolgenden DHCP-Anforderungsmeldungen zu dem DHCP-Server, so dass beliebige nachfolgende DHCP-Anforderungsmeldungen die Validierung durch den DHCP-Server bestehen können (401, 402).

3. Verfahren nach Anspruch 2, das ferner umfasst:
Schritt 5, das DHCP-Relay steuert und managt die Interaktion zwischen dem DHCP-Client und dem DHCP-Server, variiert Netzparameter des DHCP-Client und detektiert den DHCP-Client online gemäß den Anforderungen der Agentmanagementsstrategie.

4. Verfahren nach Anspruch 2, wobei in Schritt 1 für eine DHCPDISCOVER- oder DHCPREQUEST-Meldung, die von dem DHCP-Client zu dem DHCP-Server gesendet wird, das DHCP-Relay die Felder, die dem DHCP-Relay zugeordnet sind, mit Werten ausfüllt, so dass eine DHCPOFFER-, DHCPACK- oder DHCPNAK-Antwort von dem DHCP-Server zu dem DHCP-Client zu dem DHCP-Relay gesendet werden kann.

5. Verfahren nach Anspruch 4, wobei in Schritt 2 das DHCP-Relay eine DHCPOFFER-, DHCPACK- oder DHCPNAK-Antwort empfängt, die DHCP-Serverparameter in der DHCPOFFER-, DHCPACK- oder DHCPNAK-Antwort extrahiert und speichert und die DHCP-Serverparameter durch die DHCP-Relayparameter ersetzt, so dass eine Unicast-Anforderung zu dem DHCP-Server noch zu dem DHCP-Relay gesendet werden kann, nachdem der DHCP-Client eine IP-Adresse konfiguriert hat.

6. Verfahren nach Anspruch 4, wobei in Schritt 3 das DHCP-Relay die nachfolgenden DHCP-Antwortmeldungen empfängt und das DHCP-Relay dann, wenn die Felder, die dem DHCP-Server zugeordnet sind, enthalten sind, die Werte der Felder, die dem DHCP-Server zugeordnet sind, durch seine IP-Adresse ersetzt.

7. Verfahren nach Anspruch 6, wobei die nachfolgenden DHCP-Antwortmeldungen eine DHCPACK-Meldung im "Dynamical Host Configuration Protocol" sind.

8. Verfahren nach Anspruch 6, wobei die nachfolgenden DHCP-Antwortmeldungen eine DHCPREQUEST-Meldung, DHCPINFORM-Meldung oder DHCPRELEASE-Meldung im "Dynamical Host Configuration Protocol" sind.

## Revendications

1. Procédé d'un dispositif d'accès à large bande pour le contrôle d'un utilisateur de relais DHCP, **caractérisé en ce que** le procédé consiste à mettre en oeuvre la commande et la gestion d'interaction entre un client DHCP et un serveur DHCP, le procédé comprenant la modification de champs de protocole dans tous les messages DHCP en interaction entre le client DHCP et le serveur DHCP par l'intermédiaire d'un relais DHCP au cours d'une phase d'initiation de l'interaction DHCP à la couche d'application de protocole TCP/IP, de sorte que tous les messages DHCP en interaction entre le client DHCP et le serveur DHCP puissent passer à travers le relais DHCP ;
dans lequel la modification comprend en outre l'étape suivante :
Etape 1, après la réception de messages DHCP de demande envoyés du client DHCP au serveur DHCP, le remplissage par le relais DHCP de champs associés au relais DHCP dans le message DHCP de demande puis l'envoi du message DHCP de demande au serveur DHCP, de sorte que les messages DHCP de réponse retournés du serveur DHCP au client DHCP puissent passer à travers le relais DHCP (100).

2. Procédé selon la revendication 1, dans lequel la modification comprend en outre les étapes suivantes :
Etape 2, après la réception d'un premier message DHCP de réponse retourné du serveur DHCP au client DHCP, l'extraction et le stockage par le relais DHCP de paramètres de serveur DHCP des champs associés au serveur DHCP dans le premier message DHCP de réponse puis le remplacement par le relais DHCP des paramètres de serveur DHCP par des paramètres de relais DHCP du relais DHCP et l'envoi par le relais DHCP du premier message DHCP de réponse au client DHCP (200) ;
Etape 3, le traitement par le relais DHCP des messages DHCP de réponse suivants reçus retournés du serveur DHCP au client DHCP, la détermination par le relais DHCP si les messages DHCP de réponse suivants contiennent les champs associés au serveur DHCP, si tel n'est pas le cas l'envoi par le relais DHCP des messages DHCP de réponse suivants directement au client DHCP, sinon le remplacement par le relais DHCP des paramètres de serveur DHCP dans les champs associés au serveur DHCP par les paramètres de relais DHCP, puis l'envoi par le relais DHCP des messages DHCP de réponse suivants au client DHCP de sorte que les messages DHCP de demande suivants envoyés du client DHCP au serveur DHCP puissent passer à travers le relais DHCP (301, 302) ;
Etape 4, le traitement par le relais DHCP des messages DHCP de demande suivants, la détermination par le relais DHCP si les messages DHCP de demande suivants contiennent les champs associés au serveur DHCP, si tel n'est pas le cas l'envoi par le relais DHCP du paquet de données de demande suivant directement au serveur DHCP, sinon le remplissage par le relais DHCP des champs associés au serveur DHCP avec le paramètre de serveur DHCP stocké à l'étape 2, puis l'envoi par le serveur DHCP des messages DHCP de demande suivants au serveur DHCP de sorte que les messages DHCP de demande suivants puissent réussir un contrôle de validité par le serveur DHCP (401, 402).

3. Procédé selon la revendication 2, comprenant en outre :
Etape 5, la commande et la gestion par le relais DHCP de l'interaction entre le client DHCP et le serveur DHCP, la modification par le relais DHCP de paramètres de réseau du client DHCP et la détection par le relais DHCP du client DHCP en ligne en fonction d'exigences d'une stratégie de gestion d'utilisateur.

4. Procédé selon la revendication 2, dans lequel à l'étape 1, pour un message DHCPDISCOVER ou DHCPREQUEST envoyé du client DHCP au serveur DHCP, le relais DHCP remplit les champs associés au relais DHCP avec des valeurs de sorte qu'une réponse DHCPOFFER, DHCPACK ou DHCPNAK du serveur DHCP au client DHCP puisse être envoyée au relais DHCP.

5. Procédé selon la revendication 4, dans lequel à l'étape 2, le relais DHCP reçoit une réponse DHCPOFFER, DHCPACK ou DHCPNAK, extrait et stocke les paramètres de serveur DHCP dans la réponse DHCPOFFER, DHCPACK ou DHCPNAK, et remplace les paramètres de serveur DHCP par les paramètres de relais DHCP de sorte qu'une demande unicast au serveur DHCP puisse toujours être envoyée au relais DHCP après la configuration de l'adresse IP par le client DHCP.

6. Procédé selon la revendication 4, dans lequel à l'étape 3, le relais DHCP reçoit les messages DHCP de réponse suivants, et si les champs associés au serveur DHCP sont contenus, le relais DHCP remplace les valeurs des champs associés au serveur DHCP par son adresse IP.

7. Procédé selon la revendication 6, dans lequel les messages DHCP de réponse suivants sont des messages DHCPACK dans le protocole de configuration d'hôte dynamique, DHCP.

8. Procédé selon la revendication 6, dans lequel les messages DHCP de demande suivants sont des messages DHCPREQUEST, DHCPINFORM ou DHCPRELEASE dans le protocole de configuration d'hôte dynamique, DHCP.
